# EUROPEAN PATENT SPECIFICATION

(11) **EP 1 126 755 B1**
(45) Date of publication and mention of the grant of the patent: **11.06.2003**
(21) Application number: 99971263.1
(22) Date of filing: 01.11.1999
(51) Int. Cl.: A01G 9/14

(54) **BUILDING HAVING JOISTS AND A GUTTER, AND A GUTTER AND JOIST FOR USE THEREIN**
GEBÄUDE MIT TRÄGERN UND EINER DACHRINNE, DACHRINNE UND TRÄGER ZUR VERWENDUNG DARIN
BATIMENT COMPORTANT DES POUTRELLES ET UNE GOUTTIERE, ET GOUTTIERE ET POUTRELLE CORRESPONDANTES

(30) Priority: 30.10.1998 NL 1010438
(43) Date of publication of application: 29.08.2001
(73) Proprietor: Rovero Systems B.V., 4941 VW Raamsdonksveer (NL)
(72) Inventor: VERMEULEN, Arnoldus, Henricus, Antonius, NL-4844 EZ Terheijden (NL)
(74) Representative: Bartelds, Erik
(86) International application number: NL9900671
(87) International publication number: WO00025571

(56) References cited:
- DE-A- 2 136 566
- DE-A- 2 557 699
- FR-A- 2 386 760
- FR-A- 2 388 486
- NL-A- 7 707 186
- NL-A- 8 200 282
- US-A- 3 911 632
- US-A- 4 173 101
- US-A- 5 197 238
- US-A- 5 564 234
- "Multigrip cladding system, Data Sheet CRG(B)" January 1986 (1986-01) , FORDINGBRIDGE ENGINEERING LTD. , ARUNDEL, GB XP002128661 page 1 -page 2

## Description

The invention relates to a building comprising a skeleton which is formed by a number of uprights and beams connecting the uprights, and a cover layer of relatively thin material arranged on the outside of the skeleton, wherein a substantially horizontally running gutter is arranged along at least one edge of the cover layer. Such a building is known, for instance in the form of a greenhouse or glasshouse, from US-A-5,197,238.

This known glasshouse for horticulture is formed by a generally steel skeleton consisting of uprights and longitudinal and cross beams arranged therebetween. Arranged on the outside over the skeleton is a cover layer which consists of roof sections and possibly side walls. The roof sections are herein manufactured from a transparent foil.

The cross beams are formed by tubes, which are connected to the other structural members by straps. These tubular crossbeams are arched, and consequently the roof sections are arched as well. Between adjacent roof sections gutters are arranged in parallel to the longitudinal beams, and these gutters carry the straps fixing the cross beams.

The invention now has for its object to provide a building with a skeleton which is simple to assemble and has a minimal contact surface with the cover layer. This is achieved according to the invention in that at least a part of the beams is formed by a beam member having a cross-section with a substantially flat side directed toward the inside of the building and a curved side located opposite thereto and bringing about a minimal contact surface between the beam member and the cover layer arranged thereover. The flat side allows simple fixing of the beam member, while the minimal contact surface leads to less wear of the cover layer and better insulation.

It should be noted that DE-A-25 57 699 already discloses a profiled beam for a supporting and fixing the cover layer of a greenhouse, which includes a substantially flat bottom and a rounded M-shaped top. However, this cross-section does not serve to minimize contact surface area. In this prior art greenhouse, the cover is clamped in a groove defined between the two legs of the M-shape by a tensioning wire. In order to secunely fix the cover to the beams, the prior art structure is directed at maximizing the contact surface area between the cover and the beams.

In preference the beam member herein has a closed cross-section and the flat and curved side are connected by two standing sides. When the distance between the standing sides is then smaller than the distance between the flat and curved side, a relatively strong and rigid skeleton is formed without the light incidence being obstructed too much thereby.

For the culture of products in a glasshouse for horticulture it is important that a desired atmosphere be maintained in the glasshouse. The air humidity is one of the factors which must be regulated for this purpose. In addition, it is of great importance that as much light as possible can penetrate into the glasshouse. With a view to both the regulation of the air humidity and maximizing of the light incidence, condensation formed on the inside of the roof section(s) must be drained as quickly as possible. It is important herein that the condensation drain has the least possible shading effect.

The invention therefore has for its further object to provide a building wherein a rapid and simple drainage of condensation from the roof section(s) is ensured with a minimal shading effect. In a preferred embodiment of the invention this is achieved in that the gutter has means protruding inside the cover layer for collecting condensed moisture flowing along the inner side of the cover layer, as known per se from the prior art document US-A-3,911,632.

In order to prevent the collected condensation evaporating again inside the building and the air humidity thus increasing, the condensation collecting means are preferably in liquid connection with a part of the gutter protruding outside the cover layer.

In a structurally simple embodiment of the building the condensation collecting means comprise at least one condensation channel extending substantially parallel to the gutter, and the liquid connection is formed by at least one, but preferably a plurality of draining openings arranged spaced apart in or close to the bottom of the or each condensation channel.

In order to minimize the shading effect of the gutter with condensation drain, the gutter is preferably of substantially U-shaped cross-section and the or each condensation channel extends to the inside of the U-shape. When the or each condensation channel with the associated draining openings is then arranged close to the open top side of the U-shape, the full height of the U-shaped gutter can be utilized for draining water.

Means can herein be arranged on the inside of the or each condensation channel for fixing of the cover layer, which will then therefore extend inward beyond the condensation channel so that condensation is easily collected. When the cover layer comprises a foil, the fixing means are preferably adapted to clamp the foil, thereby enabling a simple fixing.

A gutter which is simple to install is obtained when at least the or each condensation channel is formed integrally with the gutter. The fixing means are preferably also formed integrally with the condensation channel.

For a minimal shading effect the gutter can take a cantilevered form. So as to prevent bending of the gutter in the case of heavy loads, for instance during snowfall, the building preferably has means arranged on the underside of the gutter for supporting thereof. These support means can comprise at least one support beam extending parallel to the gutter.

Finally, the invention further relates to a beam for use in a building as described.

The invention is now elucidated on the basis of an embodiment wherein reference is made to the annexed drawing, in which:
Fig. 1 shows a perspective top view of a building according to the invention,
Fig. 2 is a perspective detail view of a first embodiment of a gutter for use in the building of fig. 1;
Fig. 3 shows a view corresponding with fig. 2 of a gutter with a support beam arranged thereunder;
Fig. 4 is a partly cross-sectional view showing schematically the collection of condensation in the gutter of fig. 3; and
Fig. 5 is a cross-sectional perspective detail view of a beam for use in the building according to the invention.

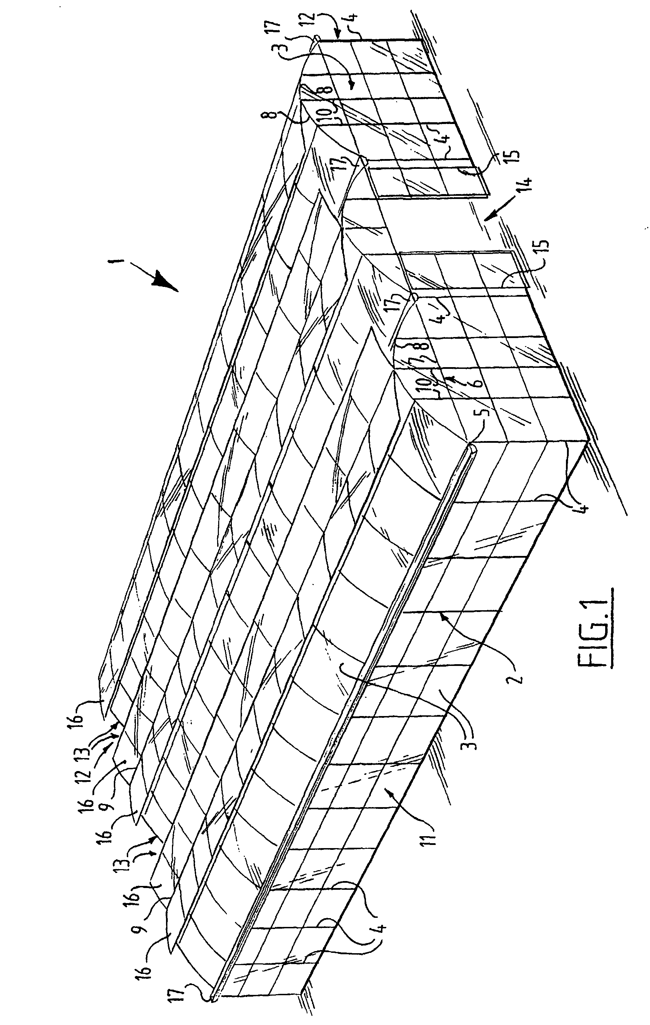

A building 1, in particular a glasshouse for horticultural, consists of a skeleton 2 and a cover layer 3 arranged thereover (fig. 1). Skeleton 2 is formed by a number of uprights 4 placed in parallel rows and longitudinal beams 5 and cross beams 6 arranged therebetween. Cross beams 6 have an arcuate form with a horizontal lower beam part 7 and two curved roof trusses 8 which are mutually connected in a ridge 9 of building 1. Struts 10 or a framework can also be arranged between lower beam part 7 and roof trusses 8.

Cover layer 3 is formed by side walls 11, a rear and front wall 12 and roof sections 13. Walls 11, 12 and roof sections 13 can herein be covered with glass, although in the shown embodiment the walls and roof sections are formed by a transparent foil which is stretched over the skeleton. An access opening 14 with sliding doors 15 is further arranged in front wall 12, while top hung windows 16 are formed in conventional manner in each roof section 13 for ventilating the interior of building 1.

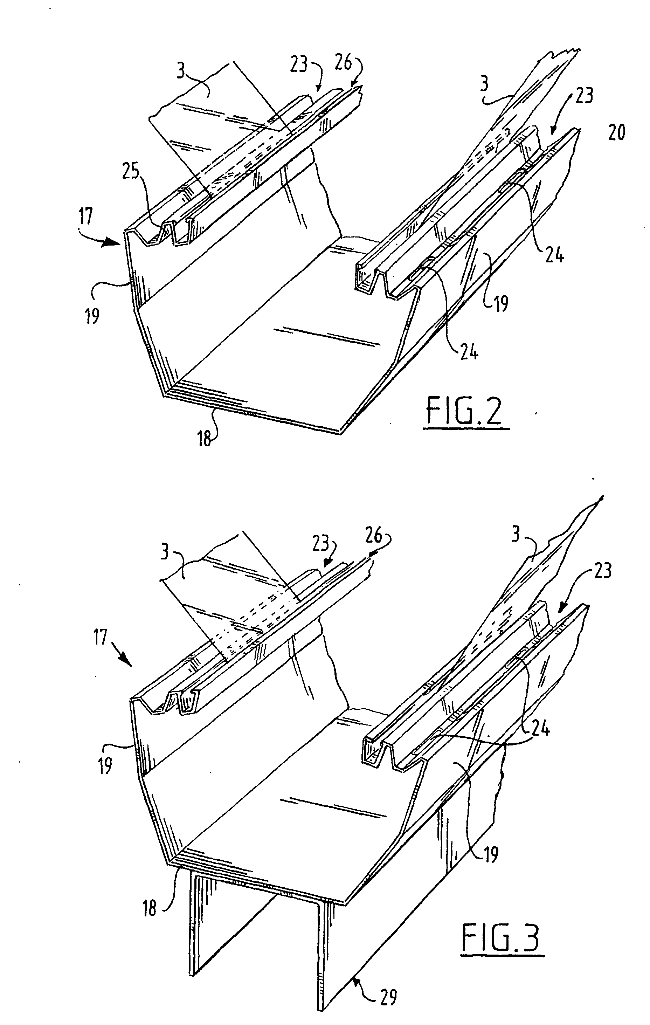

Between roof sections 13 and on the outermost end edges of the outer roof sections are arranged gutters 17 for draining rainwater and other precipitation. Each gutter 17 has a substantially U-shaped cross-section with a bottom 18 and two standing walls 19 (fig. 2). In addition, each gutter 17 is provided with means 20 for collecting condensation moisture 21 flowing along the inner side 22 of cover layer 3, and particularly the inner side of the roof section(s) 13 adjoining gutter 17.

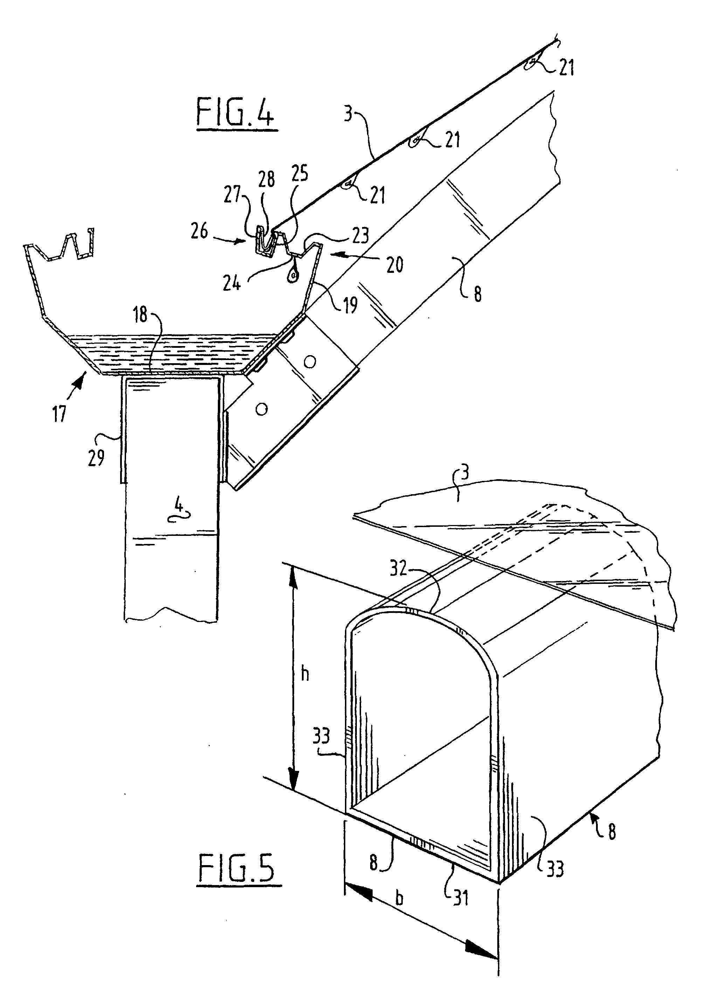

In the shown embodiment the condensation collecting means 20 are formed by two condensation channels 23 which each extend along an upper edge of the walls 19 of gutter 17 and protrude inward in the U-shape of the cross-section. Each condensation channel 23, which in the shown embodiment has a V-shaped cross-section, is in liquid connection with gutter 17 via a number of draining openings 24 arranged spaced apart. Further arranged along the inner edge 25 of each condensation channel 23 are means 26 for clamping the foil-like cover layer 3, here in the form of a profiled strip 27 into which a complementary clamping profile 28 can be clamped or snapped. Because cover layer 3 thus extends toward the inside beyond condensation channel 23, it is ensured that all condensation flowing along cover layer 3 runs into condensation channel 23 (fig. 4). Because condensation channels 23 extend inside the U-shaped cross-section of gutter 17, the total shading effect of gutter 17 with condensation channels 23 is also minimal. In addition, because condensation channels 23 and their draining openings 24 are arranged on the top side of U-shaped gutter 17, the full height of gutter 17 is available for draining rainwater without the danger of this water penetrating into building 1 through openings 24.

In the shown embodiment the gutter 17, condensation channels 23 and profiled strip 27 are otherwise formed integrally, whereby installation and fitting operations are limited to a minimum during erection of the building. Gutter 17 with condensation channels 23 and profiled strip 27 can herein be formed by bending or rolling, starting from a length of strip material, although direct extrusion of the assembled profile of gutter 17 and parts connected thereto is also possible.

Gutter 17 is in principle dimensioned such that it can be suspended in cantilevered manner between two uprights 4. However, in order to prevent bending or sagging of gutter 17 when it is heavily loaded, for instance in the case of snowfall, a support beam 29 (fig. 3) can be arranged on the underside of gutter 17. With a suitable dimensioning of beam 29 the shading effect of gutter 17 is not affected thereby.

In order to simplify erection of building 1 and to simultaneously maximize the light incidence therein, at least a part of beams 5, 6 is embodied with a special profile shape (fig. 5). This profile 30 has a side 31 directed toward the inside of building 1 which is flat and a side 32 located opposite thereto which has a curved form. These two sides 31, 32 are connected by two standing sides 33. The distance b between the standing sides 33 (the "width") is smaller than the distance h between the flat side 31 and the curved side 32 (the "height"), so that a relatively slender and high profile 30 is formed, the strength and rigidity of which are greater in vertical direction than in horizontal direction, which is likewise the case for the loads acting thereon. In the shown embodiment the profile 30 is applied particularly for the roof trusses 8. Due to the slender form the shading effect of profile 30 is minimal, while in addition the flat underside 31 enables a simple fixing. Finally, the curvature of the top side 31 brings about a minimal contact surface between profile 30 and the cover layer 3 arranged thereover, which results in less wear of cover layer 3 (particularly when it is manufactured from a foil material), and in a better insulation.

Although the invention is elucidated above with reference to one embodiment, it will be apparent that it is not limited thereto. The scope of the invention is defined solely by the appended claims.

## Claims

1. Building (1) comprising a skeleton (2) which is formed by a number of uprights (4) and beams (5,6) connecting the uprights (4), and a cover layer (3) of relatively thin material arranged on the outside of the skeleton (2), wherein a substantially horizontally running gutter (17) is arranged along at least one edge of the cover layer (3), **characterized in that** at least a part of the beams (5,6) is formed by a beam member (8) having a cross-section with a substantially flat side (31) directed toward the inside of the building (1) and a curved side (32) located opposite thereto and bringing about a minimal contact surface between the beam member (8) and the cover layer (3) arranged thereover.

2. Building (1) as claimed in claim 1, **characterized in that** the beam member (8) has a closed cross-section and the flat and curved sides (31,32) are connected by two standing sides (33).

3. Building (1) as claimed in claim 2, **characterized in that** the distance (6) between the standing sides (33) is smaller than the distance (4) between the flat and curved sides (31,32).

4. Building (1) as claimed in any of the foregoing claims, **characterized in that** the gutter (17) has means (20) protruding inside the cover layer (3) for collecting condensed moisture (21) flowing along the inner side (22) of the cover layer (3).

5. Building (1) as claimed in claim 4, **characterized in that** the condensation collecting means (20) are in liquid connection with a part of the gutter (17) protruding outside the cover layer (3).

6. Building (1) as claimed in claim 5, **characterized in that** the condensation collecting means (20) comprise at least one condensation channel (23) extending substantially parallel to the gutter (17), and the liquid connection is formed by at least one draining opening (24) arranged in or close to the bottom of the or each condensation channel (23).

7. Building (1) as claimed in claim 6, **characterized by** a plurality of draining openings (24) arranged spaced apart in or close to the bottom of the or each condensation channel (23).

8. Building (1) as claimed in claim 6 or 7, **characterized in that** the gutter (17) is of substantially U-shaped cross-section and the or each condensation channel (23) extends to the inside of the U-shape.

9. Building (1) as claimed in claim 8, **characterized in that** the or each condensation channel (23) is arranged close to the open top side of the U-shape.

10. Building (1) as claimed in claim 8 or 9, **characterized by** means (26) arranged on the inside of the or each condensation channel (23) for fixing of the cover layer (3).

11. Building (1) as claimed in claim 10, **characterized in that** the cover layer (3) comprises a foil and the fixing means (26) are adapted to clamp the foil.

12. Building (1) as claimed in any of the claims 6-11, **characterized in that** at least the or each condensation channel (23) is formed integrally with the gutter (17).

13. Building (1) as claimed in any of the claims 8-12, **characterized in that** the fixing means (26) are formed integrally with the condensation channel (23).

14. Building (1) as claimed in any of the foregoing claims, **characterized by** means (29) arranged on the underside of the gutter (17) for supporting thereof.

15. Building (1) as claimed in claim 14, **characterized in that** the support means (29) comprise at least one support beam extending parallel to the gutter (17).

16. Beam (5,6) for use in a building (1) as claimed in any of the foregoing claims, including a beam member (8) having a cross-section with a substantially flat side (31) to be directed toward the inside of the building (1) and a curved side (32) located opposite thereto and arranged to bring about a minimal contact surface with a cover layer (3) to be arranged thereover.

## Patentansprüche

1. Gebäude (1) mit einem Skelett (2), welches von einer Anzahl von Stützen (4) und Trägern (5,6) gebildet wird, welche die Stützen (4) miteinander verbinden, und einer an der Außenseite des Skeletts (2) angeordneten Abdeckungs-Schicht (3) aus relativ dünnem Material, wobei eine insgesamt horizontal verlaufende Rinne (17) mindestens an dem einen Rand der Abdeckungs-Schicht (3) angeordnet ist, **dadurch gekennzeichnet, dass** mindestens ein Teil der Träger (5,6) von einem Träger-Element (8) gebildet wird, das einen Querschnitt mit einer im Wesentlichen ebenen Seite (31), die in Richtung zu der Innenseite des Gebäudes (1) gerichtet ist, und einer bogenförmigen Seite (32) aufweist, die dazu entgegengesetzt angeordnet ist und eine minimalen Kontaktfläche zwischen dem Träger-Element (8) und der darüber angeordneten Abdeckungs-Schicht (2) herbeiführt.

2. Gebäude (1) gemäß Anspruch 1, **dadurch gekennzeichnet, dass** das Träger-Element (8) einen geschlossenen Querschnitt aufweist, und die ebene und die bogenförmige Seite (31,32) von zwei stehenden Seiten (33) miteinander verbunden sind.

3. Gebäude (1) gemäß Anspruch 2, **dadurch gekennzeichnet, dass** der Abstand (b) zwischen den stehenden Seiten (33) kleiner als der Abstand (h) zwischen der ebenen und der bogenförmigen Seite (31,32) ist.

4. Gebäude (1) gemäß einem der vorhergehenden Ansprüche, **dadurch gekennzeichnet, dass** die Rinne (17) in die Abdeckungs-Schicht (3) vorstehende Mittel (20) zum Sammeln kondensierter Feuchtigkeit (21) aufweist, die entlang der Innenseite (23) der Abdeckungs-Schicht (3) fließt.

5. Gebäude (1) gemäß Anspruch 4, **dadurch gekennzeichnet, dass** die Kondensat-Sammelmittel (20) an einem Teil der Rinne (17) durchgängig für Flüssigkeit miteinander verbunden sind, welche aus der Abdeckungs-Schicht (3) herausragt.

6. Gebäude (1) gemäß Anspruch 5, **dadurch gekennzeichnet, dass** die Kondensat-Sammelmittel (20) mindestens einen Kondensat-Kanal (23) aufweisen, der sich im Wesentlichen parallel zu der Rinne (17) erstreckt, und die Flüssigkeits-Durchgangs-Verbindung von mindestens einer Entwässerungs-Öffnung (24) gebildet wird, die in oder nahe zu dem Boden des oder jedes Kondensat-Kanals (23) angeordnet ist.

7. Gebäude (1) gemäß Anspruch 6, **dadurch gekennzeichnet, dass** eine Mehrzahl von Entwässerungs-Öffnung (24) mit Zwischenraum in oder nahe am Boden des oder jedes Kondensat-Kanals (23) angeordnet sind.

8. Gebäude (1) gemäß einem Anspruch 6 oder 7, **dadurch gekennzeichnet, dass** die Rinne (17) einen im wesentlichen U-förmigen Querschnitt aufweist und der oder jeder Kondensat-Kanal (23) sich in Richtung zu der Innenseite der U-Form erstreckt.

9. Gebäude (1) gemäß Anspruch 8, **dadurch gekennzeichnet, dass** der oder jeder Kondensat-Kanal (23) nahe an der offenen Oberseite der U-Form angeordnet ist.

10. Gebäude (1) gemäß Anspruch 8 oder 9, **dadurch gekennzeichnet, dass** Mittel (26) an der Innenseite des oder jedes Kondensat-Kanals (23) zur Befestigung der Abdeckungs-Schicht (3) angeordnet sind.

11. Gebäude (1) gemäß Anspruch 10, **dadurch gekennzeichnet, dass** die Abdeckungs-Schicht (3) eine Folie aufweist und die Befestigungsmittel (26) zum Festklemmen der Folie angepasst sind.

12. Gebäude (1) gemäß einem der Ansprüche 6 bis 11, **dadurch gekennzeichnet, dass** mindestens der oder jeder Kondensat-Kanal (23) einstückig mit der Rinne (17) ausgebildet ist.

13. Gebäude (1) gemäß einem der Ansprüche 8 bis 12, **dadurch gekennzeichnet, dass** die Befestigungsmittel (26) einstückig mit dem Kondensat-Kanal (23) ausgebildet sind.

14. Gebäude (1) gemäß einem der vorhergehenden Ansprüche **gekennzeichnet dadurch, dass** Mittel (29) an der Unterseite der Rinne (17) zu deren Abstützung angeordnet sind.

15. Gebäude (1) gemäß Anspruch 14, **dadurch gekennzeichnet, dass** die Stütz-Mittel (29) mindestens einen Stützträger aufweisen, der sich parallel zu der Rinne (17) erstreckt.

16. Träger (5,6) zur Verwendung in einem Gebäude (1) gemäß einem der vorhergehenden Ansprüche, mit einem Träger-Element (8), das einen Querschnitt mit einer im Wesentlichen ebenen Seite (31), die in Richtung zu der Innenseite des Gebäudes (1) gerichtet ist und einer bogenförmigen Seite (33) aufweist, die an der dazu gegenüberliegenden Seite angeordnet ist und angeordnet ist, eine minimale Kontaktfläche mit einer darüber angeordneten Abdeckungs-Schicht (3) herbeizuführen.

## Revendications

1. Bâtiment (1) comprenant une ossature (2) qui est formée par un certain nombre de poteaux (4) et de poutres (5, 6) reliant les poteaux (4), et une couche de revêtement (3) en un matériau relativement mince, disposée sur l'extérieur de l'ossature (2), dans lequel une gouttière (17), qui s'étend sensiblement horizontalement, est disposée le long d'au moins un bord de la couche de revêtement (3), **caractérisé en ce qu'**au moins une partie des poutres (5, 6) est constituée par un élément formant poutre (8) présentant une section transversale ayant un côté sensiblement plat (31), dirigé vers l'intérieur du bâtiment (1), et un côté courbe (32), situé à l'opposé du premier et ne donnant lieu qu'à une surface de contact minimale entre l'élément formant poutre (8) et la couche de revêtement (3) disposée sur celui-ci.

2. Bâtiment (1) selon la revendication 1, **caractérisé en ce que** l'élément formant poutre (8) présente une section transversale fermée et **en ce que** les côtés plat et courbe (31, 32) sont reliés par deux côtés droits (33).

3. Bâtiment (1) selon la revendication 2, **caractérisé en ce que** la distance (6) entre les côtés droits (33) est inférieure à la distance (4) entre les côtés plat et courbe (31, 32).

4. Bâtiment (1) selon l'une quelconque des revendications précédentes, **caractérisé en ce que** la gouttière (17) comporte des moyens (20) qui font saillie à l'intérieur de la couche de revêtement (3) pour recueillir l'humidité (21) due à la condensation, qui s'écoule le long du côté intérieur (22) de la couche de revêtement (3).

5. Bâtiment (1) selon la revendication 4, **caractérisé en ce que** les moyens collecteurs de condensation (20) sont en communication de liquide avec une partie de la gouttière (17), faisant saillie à l'extérieur de la couche de revêtement (3).

6. Bâtiment (1) selon la revendication 5, **caractérisé en ce que** les moyens collecteurs de condensation (20) comprennent au moins un canal de condensation (23) qui s'étend sensiblement parallèlement à la gouttière (17), et **en ce que** la communication de liquide est formée par au moins une ouverture d'évacuation (24) ménagée dans le fond ou à proximité immédiate du fond du ou de chaque canal de condensation (23).

7. Bâtiment (1) selon la revendication 6, **caractérisé en ce qu'**il est prévu une pluralité d'ouvertures d'évacuation (24), disposées à intervalles dans le fond ou à proximité immédiate du fond du ou de chaque canal de condensation (23).

8. Bâtiment (1) selon la revendication 6 ou 7, **caractérisé en ce que** la gouttière (17) a une section transversale sensiblement en forme de U, et **en ce que** le ou chaque canal de condensation (23) s'étend vers l'intérieur du profil en U.

9. Bâtiment (1) selon la revendication 8, **caractérisé en ce que** le ou chaque canal de condensation (23) est disposé à proximité immédiate du côté supérieur ouvert du profil en U.

10. Bâtiment (1) selon la revendication 8 ou 9, **caractérisé par** des moyens (26) disposés sur l'intérieur du ou de chaque canal de condensation (23), pour la fixation de la couche de revêtement (3).

11. Bâtiment (1) selon la revendication 10, **caractérisé en ce que** la couche de revêtement (3) comprend une feuille et **en ce que** les moyens de fixation (26) sont adaptés au serrage de la feuille.

12. Bâtiment (1) selon l'une quelconque des revendications 6 à 11, **caractérisé en ce qu'**au moins le ou chaque canal de condensation (23) est formé d'un seul tenant avec la gouttière (17).

13. Bâtiment (1) selon l'une quelconque des revendications 8 à 12, **caractérisé en ce que** les moyens de fixation (26) sont formés d'un seul tenant avec le canal de condensation (23).

14. Bâtiment (1) selon l'une quelconque des revendications précédentes, **caractérisé par** des moyens (29) disposés contre le dessous de la gouttière (17) pour la soutenir.

15. Bâtiment (1) selon la revendication 14, **caractérisé en ce que** les moyens de soutien (29) comprennent au moins une poutre de soutien, qui s'étend parallèlement à la gouttière (17).

16. Poutre (5, 6) destinée à une utilisation dans un bâtiment (1) selon l'une quelconque des revendications précédentes, comprenant un élément formant poutre (8) présentant une section transversale ayant un côté sensiblement plat (31), prévu pour être dirigé vers l'intérieur du bâtiment (1), et un côté courbe (32), situé à l'opposé du premier, et ne donnant lieu qu'à une surface minimale de contact avec une couche de revêtement (3) à disposer sur celui-ci.
